# EUROPEAN PATENT SPECIFICATION

(11) **EP 1 775 179 B1**
(45) Date of publication and mention of the grant of the patent: **20.04.2011**
(21) Application number: 06020953.3
(22) Date of filing: 05.10.2006
(51) Int. Cl.: B60R 21/264

(54) **Gas generator for airbag**
Gasgenerator für einen Airbag
Générateur de gaz pour coussin gonflable

(30) Priority: 14.10.2005 JP 2005299802; 09.11.2005 JP 2005324443
(43) Date of publication of application: 18.04.2007
(73) Proprietor: Daicel Chemical Industries, Ltd., Kita-ku, Osaka-shi Osaka 530-0001 (JP)
(72) Inventor: Matsuda, Naoki, Ibogawacho Tatsuno-shi Hyogo (JP); Ohji, Nobuyuki, Ibogawacho Tatsuno-shi Hyogo (JP)
(74) Representative: Grünecker, Kinkeldey, Stockmair & Schwanhäusser Anwaltssozietät

(56) References cited:
- EP-A- 1 264 813
- DE-A1- 19 505 580
- US-A1- 2004 060 469
- US-B1- 6 189 927

## Description

The present invention relates to a gas generator for an airbag according to the preambles of claim 1 or 2. Such gas generators can be used in a passenger restraining device in an automobile.

A gas generator of such type is known from US-B1-6 189 927. Related gas generators are known from DE 195 05 580 A1, US 2004/060469 A1 or EP-A-1 264 813.

### Description of Related Art

There has been a demand from automobile manufacturers for redaction in size and weight of a gas generator for an airbag used in a passenger restraining device in an automobile. As a method for responding to such a demand for reduction in size and weight, it is effective to simplify the structure and reduce the number of parts while maintaining the performance and quality required in a gas generator for an airbag.

Fig. 1 in US-B1 No. 6189927 (JP-A No. 2002-503584) shows an airbag inflator in which a first chamber 34 contains a second chamber 82. A gas outlet orifice 104 of the second chamber 82 is covered with an insulation shielding agent 106, but it opens or is fractured when predetermined pressure is applied thereto from the second chamber 82.

Fig. 1 in US-B2 No. 6543805 shows an inflator 10 having a first combustion chamber 200 and a second combustion chamber 180 which are separated from each other by a fixed partition wall. It is described that an ignition cup 220 of the first combustion chamber 200 is pushed by a combustion product of an ignition agent 222 and thereby slides in an axial direction.

Pig. 1 in JP-A No. 2001-199303 shows a gas generator for an airbag which has two combustion chambers 5a, 5b.

In an emergency gas generator of JP-A No. 5-168905, a bottom plate 3 of a case 1 is provided with a V-groove 5, and when a gas combustion generating agent 2 is ignited by activating a squib a and thereby gas is generated, the bottom plate 3 is fractured from the V-groove 5 and the gas is emitted therefrom to the outside.

### SUMMARY OF INVENTION

Disclosed herein is a gas generator for an airbag, including:
a combustion chamber, which includes a gas generating agent and an ignition device, being provided inside a housing having a gas discharge port,
a cup-shaped or tubular partition wall being provided inside the combustion chamber and dividing the combustion chamber into an enhancer chamber including an ignition device and an enhancer agent and a space including a gas generating agent,
a plurality of through holes being provided in a peripheral surface of the cup-shaped or tubular partition wall, a cup-shaped or tubular thin-film member covering at least a peripheral surface, having the through holes, of an inner surface or an outer surface of the partition wall.

Further disclosed is a gas generator for an air bag, including
a first combustion chamber and a second combustion chamber, each of which includes a gas generating agent and an ignition device, being provided in a housing having a gas discharge port,
a combustion chamber cup member being disposed inside the housing and separating the second combustion chamber from the first combustion chamber, the combustion chamber cup member including the second gas generating agent and the second ignition device,
a plurality of through-holes being provided in a peripheral surface of the combustion chamber cup member, a cup-shaped or tubular thin-film member covering at least a peripheral surface, including the through holes, of an inner surface or an outer surface of the combustion chamber cup member.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
Fig. 1 shows an axial sectional view of a gas generator having a single combustion chamber;
Fig. 2 shows an axial sectional view of a gas generator having two combustion chambers;
Fig. 3(a) shows a perspective view of a combustion chamber cup member or an enhancer chamber cup member, and Fig. 3(b) shows a sectional view of (a);
Fig. 4 (a) shows a perspective view of the combustion chamber cup member or enhancer chamber cup member of another embodiment, and Fig. 4(b) shows a sectional view of (a);
Fig. 5(a), (b) show perspective views of the combustion chamber cup member or enhancer chamber cup member of another embodiment; and
Fig. 6(a), (b) show perspective views of the combustion chamber cup member or enhancer chamber cup member of another embodiment.

### DETAILED DESCRIPTION OF INVENTION

The structures of the inflators described in US-B2 No. 6543805 and JP-A No. 2001-199303 are complicated, thus it is difficult to sufficiently respond to the demand for weight reduction. The structure of the inflator of US-B1 No. 6189927 (JP-A No. 2002-503584) is simpler than those of US-B2 No. 6543805 and JP-A No. 2001-199303, but the second combustion chamber is separated from the first combustion chamber by the fixing member and insulating member. In the emergency gas generator of JP-A No. 5-168905, due to the destruction of the bottom plate 3, the gas is emitted therefrom directly at once, thus the amount of gas emission cannot be controlled. Therefore, this gas generator cannot be applied as a gas generator for a dual airbag which has two ignition device and two combustion chambers.

The present invention provides a gas generator for an airbag which is entirely reduced in size by simplifying the structure thereof and has a simplified manufacturing process, while maintaining high performance and quality.

On the peripheral surface of the cup-shaped or tubular partition wall, there are formed a plurality of through-holes for emitting gas which is generated by combustion of the enhancer agent on the inside (enhancer chamber).

In a prior art, these through-holes (enhancer holes) are sealed with a metallic adhesive tape in order to prevent the enhancer agent from leaking to the combustion chamber and to increase the pressure in the enhancer chamber to a certain degree at the time of combustion (when using a gas generating agent as the enhancer agent, the pressure in the enhancer chamber is increased to fixed pressure, whereby the enhancer agent can be combusted easily).

However, the size of each through-hole is too small for the size of the peripheral surface of the cup-shaped or tubular partition wall, and the width of the adhesive tape is also narrow for the size of the peripheral surface, thus, in order to facilitate a work, the through-hole needs to be positioned before attaching the adhesive tape to the through-hole. Further, in view of the useful life span of an automobile (normally 10 years or more, there is a concern that, when using the adhesive tape, defective sealing may occur due to aged deterioration of the adhesibility, depending on the quality of the adhesive agent

In order to solve the objects posing in the light of the prior art, the invention provides the gas generators according to claims 1 and 2.

In the present invention, since at least a peripheral surface, which has the through-holes (enhancer holes), of an inner surface or an outer surface of the cup-shaped or tubular partition wall is covered with a cup-shaped or tubular thin-film member, the attachment work and positioning of the through-holes as in the conventional case where an adhesive tape is used are no longer necessary, and an adhesive agent is no longer used, thus deterioration of the adhesibility is not an issue.

The cup-shaped or tubular thin-film member is preferably made of aluminum, stainless-steel, or the like, and the thickness thereof can be approximately 50 to 1000 µm.

When covering the outer surface of the cup-shaped or tubular partition wall, the inner diameter of the cup-shaped or tubular thin-film member is preferably same as or slightly larger than the outer diameter of the partition wall, so that the thin-film member can cover the outer surface of the partition wall tightly.

When covering the inner surface of the cup-shaped or tubular partition wall, it is preferred that the outer diameter of the cup-shaped or tubular thin-filin member be slightly smaller than the inner diameter of the partition wall. When the cup-shaped or tubular thin-film member is disposed on the inside of the partition wall, the cup-shaped or tubular thin-film member is filled with the enhancer agent, thus the cup-shaped or tubular thin-film member is pressed against and attached firmly to the partition wall.

The cup-shaped thin-film member can tightly cover the entire or a part of the peripheral surface of the partition wall and the entire or a part of a bottom surface of the cup member. Since the cup-shaped thin-film member covers the bottom surface, the thin-film member is not moved even when the entire peripheral surface is not covered. However, when covering a part of the peripheral surface, a surface that includes the through-holes is certainly covered.

The tubular thin-film member can tightly cover the entire peripheral surface of the partition wall. Only a part of the peripheral surface including the through-holes may be covered, but this is not preferred because the thin-film member is moved as time passes.

An opening section of the cup-shaped or tubular partition wall abuts against a bottom surface of the housing, but a ceiling surface or an opening section in the other end may or may not abut against a ceiling surface of the housing. However, if the ceiling surface or the opening section in the other end of the cup-shaped or tubular partition wall abuts against the ceiling surface of the housing, fixation of the cup-shaped or tubular partition wall can be performed easily, which is preferred. Note that an opening end section of the cup-shaped or tubular thin-film member may be caught in the inner side of the opening section or the ceiling surface of the cup-shaped or tubular partition wall to be fixed.

On the peripheral surface of the combustion chamber cup member, there are formed a plurality of through-holes for emitting gas which is generated by combustion of the gas generating agent on the inside (second combustion chamber).

In a prior art, these through-holes are sealed with a metallic adhesive tape in order to prevent the gas generating agent inside the second combustion chamber from being ignited and caused to burn due to inflow of the gas generated in the first combustion chamber. The size of each through-hole is too small for the size of the peripheral surface of the combustion chamber cup member, and the width of the adhesive tape is also too narrow for the size of the peripheral surface, thus, in order to facilitate a work, the through-hole needs to be positioned before attaching the adhesive tape to the through-hole. Further, in view of the useful life span of an automobile (normally 10 years or more), there is a concern that, when using the adhesive tape, defective sealing may occur due to aged deterioration of the adhesibility, depending on the quality of the adhesive agent.

In the present invention, since at least a peripheral surface, which has the through-holes, of an inner surface or an outer surface of the combustion chamber cup member is covered with a cup-shaped or tubular thin-film member, the attachment work and positioning of the through-holes as in the conventional case where an adhesive tape is used are no longer necessary, and an adhesive agent is no longer used, thus deterioration of the adhesibility is not an issue.

The cup-shaped or tubular thin-film member is preferably made of aluminum, stainless-steel, or the like, and the thickness thereof can be approximately 50 to 1000 µm.

When covering the outer surface of the combustion chamber cup member, the inner diameter of the cup-shaped or tubular thin-film member is preferably same as or slightly larger than the outer diameter of the combustion chamber cup member, so that the thin-film member can be tightly attached to and cover the outer surface of the combustion chamber cup member tightly.

When covering the inner surface of the combustion chamber cup member, it is preferred that the outer diameter of the cup-shaped or tubular thin-film member be slightly smaller than the inner diameter of the combustion chamber cup member. When the cup-shaped or tubular thin-film member is disposed on the inside of the combustion chamber cup member, the cup-shaped or tubular thin-film member is filled with the gas generating agent, thus the cup-shaped or tubular thin-film member is pressed against and attached firmly to the combustion chamber cup member.

The cup-shaped thin-film member can be tightly attached to and cover the entire or a part of the peripheral surface of the combustion chamber cup member and the entire or a part of a bottom surface of the cup member. Since the cup-shaped thin-film member covers the bottom surface, the cup member is not moved even when the entire peripheral surface is not covered. However, when covering a part of the peripheral surface, a surface that includes the through-holes is certainly covered.

The tubular thin-film member can be tightly attached to and cover the entire peripheral surface of the combustion chamber cup member. Only a part of the surface including the through-holes may be covered, but it is not preferred because the thin-film member is moved as time passes.

An opening section of the combustion chamber cup member abuts against the bottom surface of the housing, but a ceiling surface of the combustion chamber cup member may or may not abut against the ceiling surface of the housing. If the ceiling surface of the combustion chamber cup member abuts against the ceiling surface of the housing, fixation of the combustion chamber cup member can be performed easily, which is preferable. Note that the opening end section of the cup-shaped or tubular thin-film member may be caught in at least the inner side of the opening section or the ceiling surface of the combustion chamber cup member to be fixed.

Further, the present invention relates to
the gas generator for an airbag, wherein the first combustion chamber is divided into an enhancer chamber accommodating a first ignition device and an enhancer agent, and a space accommodating a gas generating agent, by an enhancer chamber cup member disposed in the first combustion chamber,
and wherein a peripheral surface of the enhancer chamber cup member has a plurality of through-holes, and at least a peripheral surface, which has the through-holes, of an inner surface or an outer surface of the enhancer chamber cup member is covered with a cup-shaped or tubular thin-film member.

On the peripheral surface of the enhancer chamber cup member, there are formed a plurality of through-holes for emitting gas which is generated by combustion of the enhancer agent on the inside (enhancer chamber).

In a prior art, these through-holes (enhancer holes) are sealed with a metallic adhesive tape in order to prevent the enhancer agent from leaking into the first combustion chamber and to increase the pressure in the enhancer chamber to a certain degree at the time of combustion (when using a gas generating agent as the enhancer agent, the pressure in the enhancer chamber is increased to fixed pressure, whereby the enhancer agent can be combusted easily).

However, the size of each through-hole is small for the size of the peripheral surface of the enhancer chamber cup member, and the width of the adhesive tape is also narrow for the size of the peripheral surface, thus, in order to facilitate a work, the through-hole needs to be positioned before attaching the adhesive tape to the through-hole. Further, in view of the useful life span of an automobile (normally 10 years or more), there is a concern that, when using the adhesive tape, defective sealing may occur due to aged deterioration of the adhesibility, depending on the quality of the adhesive agent.

In the present invention, since at least a peripheral surface, which has the through-holes (enhancer holes), of an inner surface or an outer surface of the enhancer chamber cup member is covered with a cup-shaped or tubular thin-film member, the attachment work and positioning of the through-holes as in the conventional case where an adhesive tape is used are no longer necessary, and an adhesive agent is no longer used, thus deterioration of the adhesibility is not an issue.

The cup-shaped or tubular thin-film member is preferably made of aluminum, stainless-steel, or the like, and the thickness thereof can be approximately 50 to 1000 µm.

When covering the outer surface of the enhancer chamber cup member, preferably, the inner diameter of the cup-shaped or tubular thin-film member is preferably same as or slightly larger than the outer diameter of the enhancer chamber cup member, so that the thin-film member can be tightly attached to and cover the outer surface of the enhancer chamber cup member.

When covering the inner surface of the enhancer chamber cup member, it is preferred that the outer diameter of the cup-shaped or tubular thin-film member be slightly smaller than the inner diameter of the enhancer chamber cup member. When the cup-shaped or tubular thin-film member is disposed on the inside of the enhancer chamber cup member, the cup-shaped or tubular thin-film member is filled with the enhancer agent, thus the cup-shaped or tubular thin-film member is pressed against and attached firmly to the enhancer chamber cup member.

The cup-shaped thin-film member can be tightly attached to and cover the entire or a part of the peripheral surface of the enhancer chamber cup member and the entire or a part of a bottom surface. Since the cup-shaped thin-film member covers the bottom surface, the cup member is not moved even when the entire peripheral surface is not covered. However, when covering a part of the peripheral surface, a surface that includes the through-holes is certainly covered.

The tubular thin-film member can be tightly attached to and cover the entire peripheral surface of the enhancer chamber cup member. Only a part of the surface including the through-holes may be covered, but it is not preferred because the cup member is moved as time passes.

An opening section of the enhancer chamber cup member abuts against the bottom surface of the housing, but a ceiling surface of the enhancer chamber cup member may or may not abut against the ceiling surface of the housing. If the ceiling surface of the enhancer chamber cup member abuts against the ceiling surface of the housing, fixation of the enhancer chamber cup member can be performed easily, which is preferable. Note that the opening end section of the cup-shaped or tubular thin-film member may be caught in at least the inner side of the opening section or the ceiling surface of the enhancer chamber cup member to be fixed.

The through-holes (including enhancer holes) may be in the form of a general circle, or elongated in a vertical direction or in a peripheral direction, or alternatively a combination thereof.

It is accordingly preferable that the through-holes are elongated in at least one of a vertical direction and a peripheral direction.

The structure of the gas generator for an airbag of the present invention is simplified, thus the manufacturing process thereof can be simplified and the entire weight can be reduced. Moreover, the through-holes of the combustion chamber cup member or the enhancer chamber cup member do not have to be positioned beforehand, and an adhesive tape is not required.

### Preferred Embodiments of the Invention

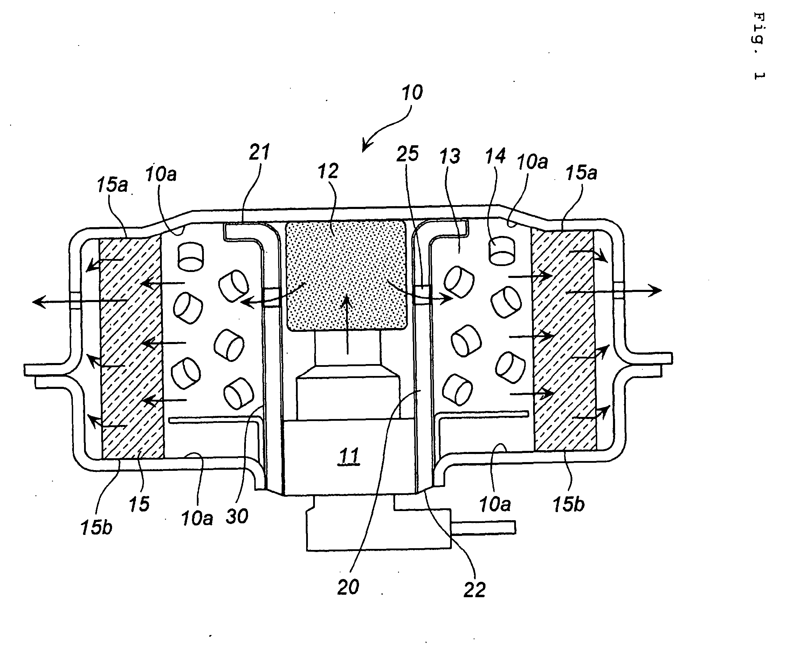

### (1) Gas generator in Fig. 1

An embodiment of the present invention is described with reference to Fig. 1. Fig. 1 is an axial sectional view of a gas generator for an airbag, to which a known gas generator (Fig. 1 in JP-A No. 2004-344740) is applied.

A combustion chamber 13 filled with a gas generating agent 14 and an enhancer chamber accommodating an enhancer agent 12 and an igniter 11 are separated from each other by a tubular partition wall 20. A flange section 21 is provided on an upper opening section of the tubular partition wall 20, the flange section 21 abutting against an internal surface 10a on a ceiling surface side, and a peripheral surface of a lower opening section edge 22 is sandwiched between the internal surface 10a on a bottom surface side and the igniter 11. The tubular partition wall 20 has a plurality of through-holes (enhancer holes) 25 on a peripheral surface thereof.

An aluminum tubular thin-film member 30 is tightly attached to and covers the entire outer peripheral surface of the tubular partition wall 20, and the enhancer hole 25 is sealed with the tubular thin-film member 30.

An upper opening section side of the tubular thin-film member 30 is involved between the flange section 21 and the internal surface 10a to be fixed, while a lower opening section side thereof is sandwiched between the tubular partition wall 20 and the internal surface 10a and fixed. Since the opening sections of the tubular thin-film member 30 on both sides are fixed in this manner, the tubular thin-film member 30 is not moved. It should be noted that the tubular thin-film member 30 can also be disposed inside the tubular partition wall 20 to seal the enhancer hole 25.

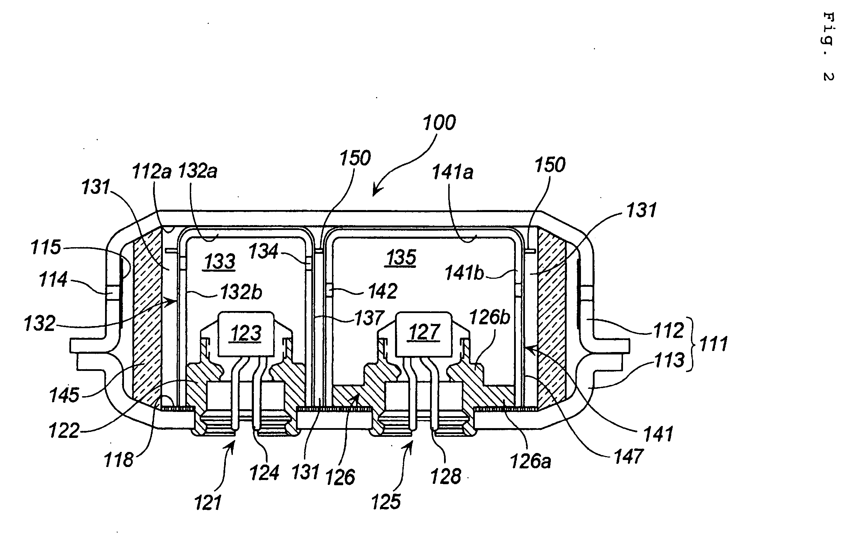

### (2) Gas generator in Fig. 2 through Fig. 6

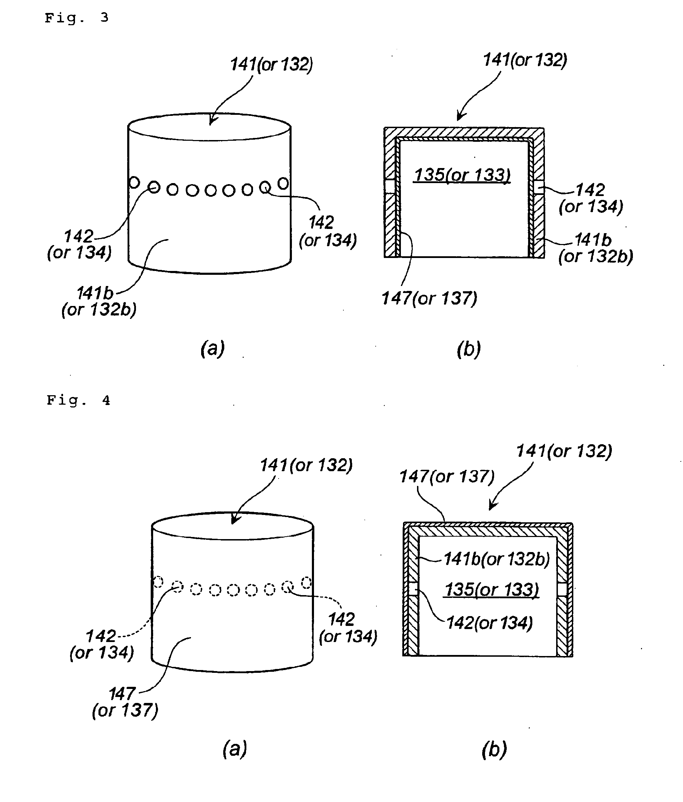

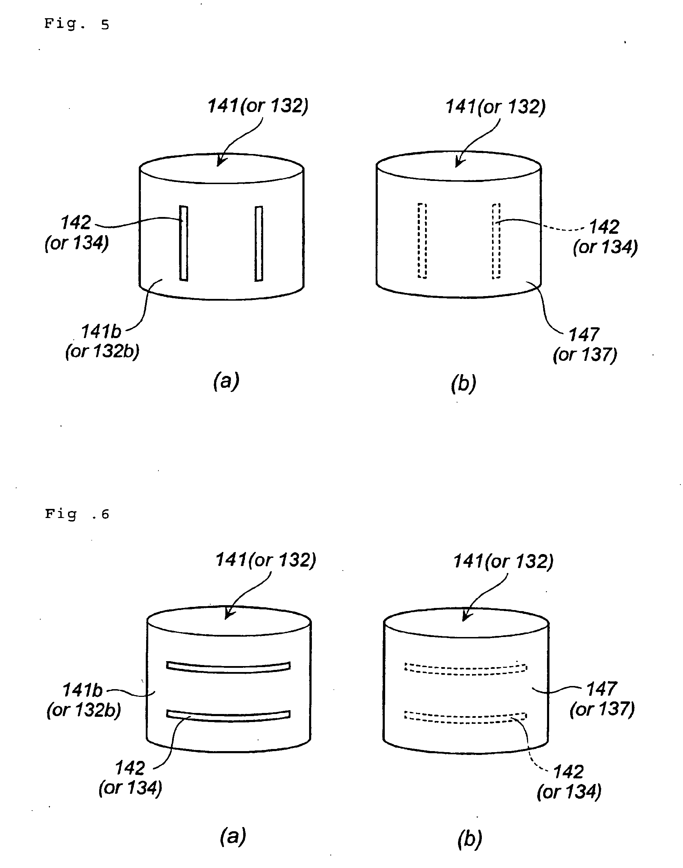

Other embodiments of the present invention will be described with reference to Fig. 2 through Fig. 6. Fig. 2 is an axial sectional view of the gas generator for an airbag. Fig. 3 (a) is a perspective view of a combustion chamber cup member or an enhancer chamber cup member shown in Fig. 2, and Fig. 3(b) is a longitudinal sectional view of Fig. 3(a). Fig. 4(a) is a perspective view of the combustion chamber cup member or enhancer chamber cup member shown in Fig. 2 according to other embodiment, and Fig. 4(b) is a longitudinal sectional view of Fig. 4(a). Fig. 5 and Fig. 6 are perspective views of the combustion chamber cup member or enhancer chamber cup member shown in Fig. 2 according to yet other embodiment.

An outer shell of a gas generator 100 for an airbag is formed from a housing 111 in which a diffuser shell 112 and a closure shell 113 are integrally joined. The diffuser shell 112 and the closure shell 113 are welded at a joint portion.

A plurality of gas discharge ports 114 are provided on a peripheral surface of the diffuser shell 112, and gas discharge ports 114 are sealed from the inside by a sealing tape 115 made of aluminum or stainless steel.

Two holes are provided on a bottom surface of the closure shell 113, and first ignition device 121 and second ignition device 125 are fitted into each hole to prevent entry of moisture from external atmosphere.

The first ignition device 121 has a first igniter 123 which is fixed to a first igniter collar 122, and a connector having a lead wire is fitted to two conductive pins 124 extending from the first igniter 123, and the connector is connected to a battery.

The second ignition device 125 has a second igniter 127 which is fixed to a second igniter collar 126, and a connector having a lead wire is fitted to two conductive pins 128 extending from the second igniter 127, and the connector is connected to a battery. The second igniter collar 126 has a larger diameter section 126a and a smaller diameter section 126b.

A first combustion chamber 131 and a second combustion chamber 135 are provided in the housing 111, and the second combustion chamber 135 is separated from the first combustion chamber 131 by a combustion chamber cup member 141 having a plurality of through-holes 142 on a peripheral surface 141b thereof. Fig. 2 shows a state in which the second combustion chamber 135 is contained in the first combustion chamber 131, but the first combustion chamber 131 and the second combustion chamber 135 may be adjacent to each other. The first combustion chamber 131 is filled with a first gas generating agent which is not shown in the drawing, and the second combustion chamber 135 is filled with a second gas generating agent which is not shown in the drawing.

The through-holes 142 can be in the shape of a circle as shown in Fig. 3 and Fig. 4 or can be vertically elongated through-holes 142, as shown in Fig. 5(a), (b). Two or more of such through-holes 142 in a vertically elongated shape can be provided at even intervals in a peripheral direction.

Moreover, the through-holes 142 can be in the shape of a circle as shown in Fig. 3 and Fig. 4 or can be through-holes 142 elongated in the peripheral direction, as shown in Fig. 6(a), (b). Two or more of such through-holes 142 which are elongated in the peripheral direction can be provided at even intervals in, preferably, a height direction and the peripheral direction.

A combination of the through-holes 142 which are elongated in the vertical direction as shown in Fig. 5 and the through-holes 142 which are elongated in the peripheral direction as shown in Fig. 6 may be disposed, or, according to the circumstances, these elongated through-holes 142 may be combined with the circular through-holes shown in Fig. 3 and Fig. 4.

An enhancer chamber cup member 132 having a plurality of enhancer holes 134 on a peripheral surface 132b thereof is disposed in the first combustion chamber 131, and the inside of the enhancer chamber cup member 132 is an enhancer chamber 133 accommodating an enhancer agent, which is not shown in the drawing, and the first ignition device 121.

The enhancer holes 134 can be in the shape of a circle as shown in Fig. 3 and Fig. 4 or can be vertically elongated enhancer holes 134, as shown in Fig. 5(a), (b). Two or more of such enhancer holes 134 in a vertically elongated shape can be provided at even intervals in the peripheral direction.

Moreover, the enhancer holes 134 can be in the shape of a circle as shown in Fig. 3 and Fig. 4 or can be enhancer holes 134 elongated in the peripheral direction, as shown in Fig. 6 (a), (b). Two or more of such enhancer holes 134 which are elongated in the peripheral direction can be provided at even intervals in a height direction and the peripheral direction.

A combination of the enhancer holes 134 which are elongated in the vertical direction as shown in Fig. 5 and the enhancer holes 134 which are elongated in the peripheral direction as shown in Fig. 6 may be disposed, or, according to the circumstances, these elongated enhancer holes 134 may be combined with the circular enhancer holes shown in Fig. 3 and Fig. 4.

An opening section of the enhancer chamber cup member 132 is fitted into the first igniter collar 122, a peripheral edge of the opening section abuts against a gasket 118 disposed on a bottom surface of the housing 111, and a bottom section 132a abuts against a ceiling surface 112a of the housing 111. Therefore, the enhancer chamber cup member 132 is positioned by the first igniter collar 122 and fixed by the ceiling surface 112a and the gasket 118 by being pressed in a vertical direction.

A larger diameter section 126a of the second igniter collar 126 having an outer diameter larger than the inner diameter of the combustion chamber cup member 141 is press-inserted into the combustion chamber cup member 141 forming the second combustion chamber 135. By press-inserting the large diameter section 126a into the combustion chamber cup member 141 in this manner, the combustion chamber cup member 141 is positioned, and movement thereof in the axial direction and radial direction can be inhibited.

A peripheral edge of an opening section of the combustion chamber cup member 141 abuts against the gasket 118 disposed on the bottom surface of the housing 111, and a bottom section 141a abuts against the ceiling surface 112a of the housing 111. Therefore, the combustion chamber cup member 141 is fixed by the ceiling surface 112a and the gasket 118 by being pressed in a vertical direction. Note that the gasket 118 can be omitted.

A disk-like retainer 150 for adjusting the volume of the first combustion chamber 131 in accordance with the filled amount of the first gas generating agent is fitted inside the first combustion chamber 131. The retainer 150 has two holes, and these two holes are fitted onto the combustion chamber cup member 141 and enhancer chamber cup member 132.

A tubular coolant/filter 145 having functions of filtering and cooling combustion gas is disposed on the outside of the first combustion chamber 131, and a gap is provided between an outer peripheral surface of the coolant/filter 145, and the gas discharge port 114 and sealing tape 115.

The structure of the combustion chamber cup member 141 forming the second combustion chamber 135 can be formed as shown in Fig. 3 or Fig. 4.

In Fig. 3(a), (b), Fig. 5(a), and Fig. 6(a), an aluminum cup-shaped thin-film member 147 is disposed in the combustion chamber cup member 141. Since the cup-shaped thin-film member 147 is filled with the second gas generating agent, which is not shown, the cup-shaped thin-film member 147 is attached firmly to the entire inner surface of the combustion chamber cup member 141 to seal the plurality of through-holes 142 from the inside.

In Fig. 4(a), (b), Fig. 5(b), and Fig. 6(b), the aluminum cup-shaped thin-film member 147 is attached firmly to and covers the entire outer surface of the combustion chamber cup member 141. The cup-shaped thin-film member 147 seals the plurality of through-holes 142 from the outside.

The structure of the enhancer chamber cup member 132 forming the enhancer chamber 133 can be formed as shown in Fig. 3 or Fig. 4.

In Fig. 3(a), (b), Fig. 5(a), and Fig. 6(a), an aluminum cup-shaped thin-film member 137 is disposed in the enhancer chamber cup member 132. Since the cup-shaped thin-film member 137 is filled with the enhancer agent, which is not shown, the cup-shaped thin-film member 137 is attached firmly to the entire inner surface of the enhancer chamber cup member 132 to seal the plurality of enhancer holes 134 from the inside.

In Fig. 4(a), (b), Fig. 5(b), and Fig. 6(b), the aluminum cup-shaped thin-film member 137 is attached firmly to and covers the entire outer surface of the enhancer chamber cup member 132. The cup-shaped thin-film member 137 seals the plurality of enhancer holes 134 from the outside.

As shown in Fig. 2, the enhancer hole 134 of the enhancer chamber cup member 132 and the through-hole 142 of the combustion chamber cup member 141 are formed so that the heights of these holes in the axial direction are different from each other.

Next, an operation in the case where the gas generator of Fig. 2 and Fig. 4 for an airbag is applied to an airbag system of an automobile will be described. It should be noted that, regarding the first igniter 123 and the second igniter 127, in accordance with the degree of shock received by the automobile at the time of collision, there are cases where only the first igniter 123 is activated, where the igniter 123 is activated first and the second igniter 127 is activated with a delay, and where the first igniter 123 and the second igniter 127 are activated simultaneously, but hereinafter, the case where the first igniter 123 is activated first and the second igniter 127 is activated with a delay is described.

When the automobile receives an impact upon collision, an active signal is received from a control unit, whereby the first igniter 123 is activated and ignited, causing ignition and combustion of the enhancer agent. Thereafter, the pressure inside the enhancer chamber 133 rises, whereby the cup-shaped thin-film member 137, which covers the enhancer hole 134 from the outside, is fractured and the enhancer hole 134 is opened, thus the combustion product (ignition energy) is discharged therefrom into the first combustion chamber 131.

The discharge of the combustion product causes ignition and combustion of the first gas generating agent, whereby high-temperature combustion gas is generated. The combustion gas is filtered and cooled as it passes through the coolant/filter 145, thereafter ruptures the sealing tape 115, and is then discharged from the gas discharge port 114 to inflate the airbag. At this moment, the second combustion chamber 135 is surrounded by the cup-shaped thin film member 147. Since the cup-shaped thin-film member 147 is not cleaved by pressure from the outside, the combustion gas generated in the first combustion chamber 131 does not flow into the second combustion chamber 135.

The second igniter 127 is activated and ignited with a slight delay, whereby the second gas generating agent is ignited and combusted and high-temperature combustion gas is generated. Under the pressure applied by the high-temperature combustion gas, the cup-shaped thin-film member 147, which covers the through-hole 142 from the outside, is fractured and the through-hole 142 is opened. For this reason, the combustion gas flows out from the through-hole 142, is filtered and cooled as it passes through the coolant/filter 145, and is then discharged from the gas discharge port 114 to further inflate the airbag.

The invention thus described, it will be obvious that the same may be varied in many ways. Such variations are not to be regarded as a departure from the scope of the invention, and all such modification as would be obvious to one skilled in the art are intended to be included within the scope of the following claims.

## Claims

1. A gas generator (10) for an air bag, comprising a combustion chamber (13), which includes a gas generating agent (14) and an ignition device (11), being provided inside a housing (10) having a gas discharge port, a cup-shaped or tubular partition wall (20) being provided inside the combustion chamber (13) and dividing the combustion chamber (13) into an enhancer chamber including an ignition device (11) and an enhancer agent (12) and a space including a gas generating agent (14), a plurality of through holes (25) being provided in a peripheral surface of the cup-shaped or tubular partition wall (20), **characterized by**
a. a cup-shaped thin-film member covering at least a peripheral surface, having the through holes (25), of an inner surface or an outer surface of the partition wall, or
b. a tubular thin-film member (30) covering at least a peripheral surface, having the through holes (25), of an inner surface or an outer surface of the partition wall, wherein an upper and/or lower opening section side of the tubular thin-film member (30) is sandwiched and fixed between the tubular partition wall (20) and an internal surface (10a, 10b) of the housing (10).

2. A gas generator (100) for an air bag, comprising a first combustion chamber (131) and a second combustion chamber (135), each of which includes a gas generating agent and an ignition device (121, 125), being provided in a housing (111) having a gas discharge port (114), a combustion chamber cup member (141) being disposed inside the housing (111) and separating the second combustion chamber (135) from the first combustion chamber (131), the combustion chamber cup member (141) including the second gas generating agent and the second ignition device (125), a plurality of through-holes (142) being provided in a peripheral surface of the combustion chamber cup member (141), **characterized by** a cup-shaped thin-film member (147) covering at least a peripheral surface, including the through holes (142), of an inner surface or an outer surface of the combustion chamber cup member (141).

3. The gas generator (100) for an airbag according to claim 2, wherein the first combustion chamber (131) is divided into an enhancer chamber (133) accommodating a first ignition device (121) and an enhancer agent, and a space accommodating a gas generating agent, by an enhancer chamber cup member (132) disposed in the first combustion chamber (131); and wherein a peripheral surface of the enhancer chamber cup member (132) has a plurality of through-holes (134), and at least a peripheral surface, which has the through-holes (134), of an inner surface or an outer surface of the enhancer chamber cup member (132) is covered with a cup-shaped or tubular thin-film member (137).

4. The gas generator (100) for an airbag according to any one of claims 1 to 3, wherein the through-holes (142, 134) are elongated in at least one of a vertical direction and a peripheral direction.

## Patentansprüche

1. Ein Gasgenerator (10) für einen Airbag, umfassend: eine Verbrennungskammer (13), einen Gas erzeugenden Stoff (14) und eine Zündeinrichtung (11) umfassend, die in einem Gehäuse (10) mit einer Gasauslassöffnung bereitgestellt sind, eine schalenförmige oder rohrförmige Trennwand (20), die innerhalb der Verbrennungskammer (13) bereitgestellt ist und die Verbrennungskammer (13) in eine Verstärkerkammer, umfassend eine Zündeinrichtung (11) und einen Verstärkerstoff (12), sowie einen Raum, umfassend einen Gas erzeugenden Stoff (14), unterteilt, wobei eine Vielzahl von Durchgangsöffnungen (25) in einer umfangsseitigen Fläche der schalenförmigen oder rohrförmigen Trennwand (20) bereitgestellt ist, **gekennzeichnet durch**
a. ein schalenförmiges dünnes Folienelement, welches zumindest eine umfangsseitige Fläche einer inneren oder äußeren Fläche der Trennwand, welche die Durchgangsöffnungen (25) aufweist, abdeckt, oder
b. ein rohrförmiges dünnes Folienelement (25), welches zumindest eine umfangsseitige Fläche einer inneren oder äußeren Fläche der Trennwand, welche die Durchgangsöffnungen (25) aufweist, abdeckt, wobei eine obere und/oder untere Öffnungsabschnittsseite des rohrförmigen dünnen Folienelements (30) zwischen der rohrförmigen Trennwand (20) und einer inneren Fläche (10a, 10b) des Gehäuses (10) angeordnet und fixiert ist.

2. Ein Gasgenerator (100) für einen Airbag, umfassend eine erste Verbrennungskammer (131) und eine zweite Verbrennungskammer (135), wobei jede davon einen Gas erzeugenden Stoff und eine Zündeinrichtung (121, 125) aufweist, die in einem Gehäuse (111) mit einer Gasauslassöffnung (114) bereitgestellt sind, wobei ein Verbrennungskammerschalenelement (141) im Inneren des Gehäuses (111) angeordnet ist und die zweite Verbrennungskammer (135) von der ersten Verbrennungskammer (131) trennt, wobei das Verbrennungskammerschalenelement (141) den zweiten Gas erzeugenden Stoff und die zweite Zündeinrichtung (125) umfasst; wobei eine Vielzahl von Durchgangsöffnungen (142) in einer umfangsseitigen Fläche des Verbrennungskammerschalenelements (141) bereitgestellt ist, **gekennzeichnet durch** ein schalenförmiges dünnen Folienelement (147), welches zumindest eine umfangsseitige Fläche einer inneren Fläche oder einer äußeren Fläche des Verbrennungskammerschalenelements (141), welche die Durchgangsöffnungen (142) aufweist, abdeckt.

3. Der Gasgenerator (100) für einen Airbag im Einklang mit Anspruch 2, wobei die erste Verbrennungskammer (131) in eine Verstärkerkammer (133), welche die erste Zündeinrichtung (121) und einen Verstärkerstoff aufnimmt, sowie einen Raum zur Aufnahme eines Gas erzeugenden Stoffs durch ein Verstärkerkammerschalenelement (132) unterteilt ist, welches in der ersten Verbrennungskammer (131) angeordnet ist; und wobei eine umfangsseitige Fläche des Verstärkerkammerschalenelements (132) eine Vielzahl von Durchgangsöffnungen (143) aufweist, wobei zumindest eine umfangsseitige Fläche einer inneren Fläche oder äußeren Fläche des Verstärkerkammerschalenelements (132), welche die Durchgangsöffnungen (134) aufweist, mit einem schalenförmigen oder rohrförmigen dünnen Folienelement (137) abgedeckt ist.

4. Der Gasgenerator (100) für einen Airbag im Einklang mit einem der Ansprüche 1 bis 3, wobei die Durchgangsöffnungen (142, 134) in zumindest einer vertikalen Richtung oder einer Umfangsrichtung länglich sind.

## Revendications

1. Générateur de gaz (10) pour un airbag, comprenant une chambre de combustion (13) qui contient un agent générateur de gaz (14) et un dispositif d'allumage (11) et qui est disposée à l'intérieur d'un boîtier (10) pourvu d'un orifice de sortie de gaz, une cloison en forme de godet ou de tube (20) qui est disposée à l'intérieur de la chambre de combustion (13) et qui divise celle-ci en une chambre activatrice contenant un dispositif d'allumage (11) et un agent activateur (12), et un espace contenant un agent générateur de gaz (14), et plusieurs trous traversants (25) qui sont disposés dans une surface périphérique de la cloison en forme de godet ou de tube (20), **caractérisé par**
a. un élément à couche mince en forme de godet qui couvre au moins une surface périphérique, pourvue des trous traversants (25), d'une surface intérieure ou d'une surface extérieure de la cloison, ou
b. un élément à couche mince tubulaire (30) qui couvre au moins une surface périphérique, pourvue des trous traversants (25), d'une surface intérieure ou d'une surface extérieure de la cloison, étant précisé qu'un côté de section d'ouverture supérieure et/ou inférieure de l'élément à couche mince tubulaire (30) est placé en sandwich et fixé entre la cloison tubulaire (20) et une surface intérieure (10a, 10b) du boîtier (10).

2. Générateur de gaz (100) pour un airbag, comprenant une première chambre de combustion (131) et une seconde chambre de combustion (135) qui contiennent chacune un agent générateur de gaz et un dispositif d'allumage (121, 125) et qui sont disposées dans un boîtier (111) présentant un orifice de sortie de gaz (114), un élément de chambre de combustion en forme de godet (141) qui est disposé à l'intérieur du boîtier (111) et qui sépare la seconde chambre de combustion (135) de la première chambre de combustion (131), ledit élément en forme de godet (141) contenant le second agent générateur de gaz et le second dispositif d'allumage (125), et plusieurs trous traversants (142) qui sont disposés dans une surface périphérique de l'élément en forme de godet (141), **caractérisé par** un élément à couche mince en forme de godet (147) qui couvre au moins une surface périphérique, pourvue des trous traversants (142), d'une surface intérieure ou d'une surface extérieure de l'élément en forme de godet (141).

3. Générateur de gaz (100) pour un airbag selon la revendication 2, dans lequel la première chambre de combustion (131) est divisée en une chambre activatrice (133) qui loge un premier dispositif d'allumage (121) et un agent activateur, et un espace qui loge un agent générateur de gaz, par un élément de chambre activatrice en forme de godet (132) qui est disposé dans la première chambre de combustion (131) ; et dans lequel une surface périphérique dudit élément en forme de godet (132) présente plusieurs trous traversants (134), et au moins une surface périphérique, pourvue des trous traversants (132), d'une surface intérieure ou d'une surface extérieure de l'élément en forme de godet (132) est couverte par un élément à couche mince en forme de godet ou de tube (137).

4. Générateur de gaz (100) pour un airbag selon l'une quelconque des revendications 1 à 3, dans lequel les trous traversants (142, 134) sont oblongs dans l'une au moins des directions verticale et périphérique.
